# EUROPÄISCHE PATENTANMELDUNG

(11) **EP 3 670 248 A1**
(43) Veröffentlichungstag der Anmeldung: **24.06.2020**
(21) Anmeldenummer: 19215450.8
(22) Anmeldetag: 12.12.2019
(51) Int. Cl.: B60L 53/66, B60L 53/68

(54) **ELEKTROMOBILITÄTSINFRASTRUKTUR MIT ERWEITERTER DATENANBINDUNG**

(30) Priorität: 19.12.2018 DE 102018132967
(71) Anmelder: Emonvia GmbH, 81379 München (DE)
(72) Erfinder: Schlutius, Eduard, 81379 München (DE); Fleischer, Dr. Patrick, 81379 München (DE); Sinka, Melinda, 81379 München (DE); Hampe, Viola, 81379 München (DE); Wendrich, Karl, 81379 München (DE); Bozkurt, Emre, 81379 München (DE); Carválho, José, 81379 München (DE); Ludwig, Pascal, 81379 München (DE); Hojayev, Allash, 81379 München (DE); Terlevic, Martina, 81379 München (DE); Reder, Uwe, 81379 München (DE); Kramer, Dr. Matthias, 81379 München (DE); Schüdzig, Benjamin, 81379 München (DE)
(74) Vertreter: Hernandez, Yorck

(57) **Zusammenfassung**

Die Erfindung betrifft ein Verfahren zum Bereitstellen einer Datenverbindung zwischen einem Endkunden und einem Dienstanbieter. Erfindungsgemäß ist es möglich, mittels eines sogenannten MID-Zählers eine Datenverbindung in vorteilhafter Weise mit einem Dienst zu verbinden, wobei ein direkter Kommunikationskanal eingerichtet wird. Ferner betrifft die vorliegende Erfindung eine entsprechend eingerichtete Systemanordnung. Darüber hinaus wird ein Computerprogrammprodukt mit Steuerbefehlen vorgeschlagen, welche das Verfahren implementieren beziehungsweise die vorgeschlagene Systemanordnung betreiben.

## Beschreibung

Die Erfindung betrifft ein Verfahren zum Bereitstellen einer Datenverbindung zwischen einem Endkunden und einem Dienstanbieter. Erfindungsgemäß ist es möglich, mittels eines Messzählers, insbesondere eines sogenannten MID-Zählers, eine Datenverbindung in vorteilhafter Weise mit einem Dienst zu verbinden, wobei ein direkter Kommunikationskanal eingerichtet wird. Der Kommunikationskanal soll bevorzugt zwei Wege abdecken, nämlich eine Anbindung via Ethernet und/ oder Mobilfunk (GSM/LTE etc.). Ferner betrifft die vorliegende Erfindung eine entsprechend eingerichtete Systemanordnung. Darüber hinaus wird ein Computerprogrammprodukt mit Steuerbefehlen vorgeschlagen, welche das Verfahren implementieren beziehungsweise die vorgeschlagene Systemanordnung betreiben.

DE 20 2017 000 380 U1 zeigt eine Messanordnung zum intelligenten Laden von Elektrofahrzeugen durch flexible Lastenverteilung auf Grundlage von personenindividuellen Fahrnutzungsdaten und fahrzeugspezifischen Zustandsdaten. Die Problematik betrifft auch den Strommarkt. Die derzeitig unflexible und schlechte Prognose der personenindividuellen Stromnutzung erschwert das Handeln auf dem Markt, da der Wettbewerb fehlt und Strom zum teuren Preis bei akuter Nachfrage gekauft werden muss.

DE 10 2013 218 046 A1 zeigt eine Serveranordnung umfassend eine Recheneinrichtung zum Bestimmen von Marktpreisen für Mobilitätsressourcen sowie eine Kommunikationsschnittstelle zum Übermitteln der Marktpreise an Fahrzeuge.

Die Ladeinfrastruktur für Elektroautos wird immer weiter ausgebaut. Neben der technischen Zuverlässigkeit der Hardware der Ladeinfrastruktur wird die Prozessautomatisierung für den Betrieb der Ladeinfrastruktur einer der wichtigsten Erfolgsfaktoren im Hochlaufen der Elektromobilität werden. Das zentrale Instrument für den Betrieb der Ladeinfrastruktur ist das sogenannte Backend, welches die Hardware der Ladeinfrastruktur IT-technisch vernetzt. Mit dem Backend kann die Ladeinfrastruktur gesteuert und damit letztlich auch bewirtschaftet werden.

Für viele Betreiber von Ladepunkten (Charge Point Operator, CPO) ist die Abrechnung der erbrachten Ladevorgänge gegenüber dem Endkunden der zentrale Baustein zur Generierung von Umsatzerlösen aus der Ladeinfrastruktur.

Der Abrechnungsprozess von Ladevorgängen wird maßgeblich von drei Hauptakteuren gestaltet, nämlich dem Betreiber der Ladeinfrastruktur (CPO), der seine Leistung (=Laden) dem Endkunden (Fahrer eines E-Autos) gegen ein Entgelt anbietet, dem Endkunden (Fahrer eines E-Autos), der die Leistung des CPO in Anspruch nimmt und diese dann bezahlt, sowie dem Betreiber eines Backend (Backend-Betreiber), an das die Ladepunkte (des CPO) zum Steuern und Überwachen des Betriebs angeschlossen sind.

Der Backend-Betreiber übernimmt dabei die Rolle eines Dienstleisters für den CPO. Der Backend-Betreiber bietet dem CPO als Dienstleistung an, die Ladevorgänge für ihn gegenüber den Endkunden abzurechnen. Dafür verlangt der Backend-Betreiber ein monatliches Entgelt (Freischaltung des Abrechnungsmoduls, z. B. 5 € je Ladepunkt pro Monat) sowie eine transaktionsbasierte Gebühr (z. B. 3 % des Transaktionsvolumens) je Ladevorgang. Der Endkunde bezahlt den Ladevorgang.

Derzeit existieren zahlreiche Backends am Markt. Zur Abrechnung der einzelnen Ladevorgänge wird vom Backend-Betreiber typischerweise ein Zahlungsdienstleister in den Prozess mit eingebunden, welcher die Ladevorgänge/ Transaktionen beim Endkunden (Fahrer eines E-Autos) abrechnet und anschließend die resultierenden Umsätze dem CPO gutschreibt.

Damit die Ladevorgänge eines CPO über das Backend abgerechnet werden können, müssen der CPO und seine Ladeinfrastruktur in das Backend eingebunden werden. Dies betrifft hauptsächlich zwei Dimensionen, nämlich das Verknüpfen der betriebswirtschaftlichen Prozesse (Know your customer Prozess, Verträge, Tarife etc.) sowie ein Anbinden der Ladeinfrastruktur (Anbindung Hardware an das Backend und an den Bezahldienstleister).

Der Prozess, um neue CPOs in das Backend aufzunehmen (=Onboarding), damit Ladevorgänge abgerechnet werden, ist ein im Detail relativ aufwändiger Prozess und umfasst Aspekte wie die Überprüfung des CPO hinsichtlich Geldwäsche etc. (Know your customer Prozess), die Übermittlung und Archivierung der zugehörigen Dokumente, das Bereitstellen einer Kopie des Personalausweises, das Bereitstellen eines Handelsregisterauszugs, das Abschließen verschiedener Verträge, die Zuordnung von Ladepunkten zum CPO und Einbindung in den Abrechnungsprozess, eine Erstellung eines Rechnungsnummernkreises für den CPO, eine IT-technische Anbindung der Hardware an das Backend sowie die Abrechnungen der Ladevorgänge gegenüber der Endkunden.

Stand der Technik in der Elektromobilität ist derzeit eine weitestgehend manuelle Anbindung der CPOs sowohl in das Backend als auch in den Abrechnungsprozess. Die Abrechnung erfolgt manchmal auf Basis von Excel-Tabellen. Ein standardisierter und automatisierter Prozess existiert aktuell in aller Regel nicht.

Ein Nachteil im Stand der Technik ist es, dass unter anderem aufgrund der manuellen Anbindung eine hohe Wahrscheinlichkeit eines Fehlers dadurch entsteht, dass der Aufwand entsprechend groß ist. So müssen gemäß herkömmlicher Verfahren Prozesse manuell durchgeführt werden und sind folglich eben auch hochgradig fehleranfällig. So besteht generell ein Bedarf an einem automatisierten Prozess, der auch bei einem dynamischen Anbinden mehrerer Anbieter keinerlei technischen Aufwand schafft. Ein weiterer Vorteil eines solchen automatischen Prozesses wäre es, dass die Zeitspanne bis zur Bearbeitung verringert wird und sich somit ein weiterer technischer Defekt ergeben würde. Dies erkennt der Stand der Technik in dieser Form nicht.

Generell bieten einige Bezahldienstleister für Internetmarktplatzmodelle spezielle Marktplatzprodukte an. Diese Marktplatzprodukte ermöglichen bei den entsprechenden Diensten eine Automatisierung der oben beschriebenen Prozesse wie Onboarding und Abrechnung.

Zusammenfassend lässt sich folgern, dass der Stand der Technik aufwändige Verfahren vorschlägt, die zudem fehleranfällig sind. Darüber hinaus sind Arbeitsprozesse vorgesehen, die aufgrund des manuellen Aufwands zeitlich länger dauern als unbedingt notwendig und somit entstehen Verzögerungen. Ziel der Erfindung ist es, diese Prozesse auch im Bereich Elektromobilität zu automatisieren, um damit in der Lage zu sein, eine große Anzahl neuer CPOs in sehr kurzer Zeit in das Backend zu integrieren. Diese Integrationskompetenz wird eine der Schlüsselqualifikationen von Backend-Betreibern beim Hochlaufen der Elektromobilität und damit entscheidend für den Selektionsprozess am Markt sein.

Es ist eine Aufgabe der vorliegenden Erfindung, ein verbessertes, insbesondere ein zuverlässigeres und wenig aufwändiges, Verfahren zum Bereitstellen einer Datenverbindung zwischen einem Endkunden und einem Dienstanbieter vorzuschlagen. Ferner ist es eine Aufgabe der vorliegenden Erfindung eine entsprechend eingerichtete Systemanordnung bereitzustellen sowie ein Computerprogrammprodukt mit Steuerbefehlen vorzuschlagen, welche das Verfahren implementieren beziehungsweise die vorgeschlagene Systemanordnung zumindest teilweise betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum Bereitstellen einer Datenverbindung zwischen einem Endkunden und einem Dienstanbieter, aufweisend ein Betreiben einer Ladestation für ein elektrisch angetriebenes Kraftfahrzeug; und ein Einrichten einer Datenkommunikationsschnittstelle in der Ladestation zur Kommunikation mit einer Datenkommunikationsschnittstelle einer Recheneinheit des Dienstanbieters, wobei eine direkte Kommunikationsverbindung von der Datenkommunikationsschnittstelle in der Ladestation zu der Datenkommunikationsschnittstelle der Recheneinheit des Dienstanbieters geschaffen wird.

Erfindungsgemäß wird eine neue Infrastruktur vorgeschlagen, welche es ermöglicht, dass im Rahmen einer Elektromobilität auch ein Anbieten weiterer Datendienste möglich ist. So erfolgt eine Anbindung einer Schnittstelle eines Endkunden an eine Schnittstelle eines Dienstanbieters. Erfindungsgemäß ist es besonders vorteilhaft, dass der Endkunde typischerweise anhand seiner Ladestation bereits eine Kommunikationsmöglichkeit vorsieht. So kann die Ladestation erfindungsgemäß drahtgebunden oder mittels einer Luftschnittstelle an eine weitere Recheneinheit kommunikativ angeschlossen werden. Dass eine direkte Verbindung hergestellt wird, kann beispielsweise dadurch erfolgen, dass keinerlei weitere Komponenten zwischengeschaltet werden, die eine semantische Änderung der verwendeten Daten übernehmen. So können zwar generell netzwerktechnische Komponenten vorgesehen werden, hierbei ist es jedoch vorteilhaft, dass diese lediglich netzwerktechnische Aufgaben übernehmen und keinerlei weitere logische Schritte ausführen. Somit wird insbesondere eine besonders effiziente Infrastruktur geschaffen, die gegenüber dem Stand der Technik besonders vorteilhaft ist. Drahtgebunden bezieht sich allgemein auch auf Glasfaser.

Der Endkunde kann als ein menschlicher Benutzer vorliegen, der mittels einer Eingabevorrichtung in der Ladestation kommuniziert, wobei es generell auch möglich ist, dass der Fahrer sich in seinem Kraftfahrzeug befindet während dieses aufgeladen wird. Folglich ist das Kraftfahrzeug mit der Ladestation bzw. dem Zähler verbunden und es besteht eine Kommunikationsschnittstelle zwischen dem Kraftfahrzeug und der Ladestation bzw. dem Zähler.

Generell ist es möglich, mittels des Ladekabels das Kraftfahrzeug kommunikativ mit der Ladestation zu koppeln. Insbesondere kann das Kraftfahrzeug mittels des Ladekabels mit dem Zähler der Ladestation gekoppelt werden. Folglich können dem Endkunden auf seinem Display innerhalb des Kraftfahrzeugs Daten angezeigt werden, anhand derer er Daten an die Ladestation bzw. den Zähler übermitteln kann. Die weitere Kommunikation kann sodann von der Ladestation durch eine weitere Schnittstelle durchgeführt werden.

Darüber hinaus kann eine herkömmliche Ladestation wieder verwendet werden, welche erfindungsgemäß derart angepasst wird, dass eine direkte Kommunikationsverbindung zu einer weiteren Schnittstelle geschaffen wird. So kann eine herkömmliche Ladestation derart angepasst werden, dass beispielsweise deren Zähler mit einer Schnittstelle ausgestattet wird. Bei einer Ladestation handelt es sich um jegliche Form einer Ladestation, welche beispielsweise an einem öffentlichen Platz installiert ist oder aber auch in einer privaten Garage. Folglich ist erfindungsgemäß der Begriff der Ladestation breit auszulegen.

Bei einem elektrisch angetriebenen Kraftfahrzeug kann es sich entweder um ein Elektromobil handeln oder aber auch um ein Hybrid-Fahrzeug. Erfindungsgemäß werden also alle Kraftfahrzeuge weiter entwickelt, welche einen elektrischen Antrieb aufweisen, wobei die Kraftfahrzeuge additiv einen Verbrennungsmotor aufweisen können.

Das Einrichten der Datenkommunikationsschnittstelle in der Ladestation erfolgt beispielsweise derart, dass der Messzähler bzw. der Energiezähler angepasst wird, so das lediglich ein geringer Aufwand notwendig ist, da der Energiezähler typischerweise sowieso mit dem Kraftfahrzeug verbunden ist. Auf diese Art und Weise kann in dem vorgeschlagenen Anwendungsszenario die entsprechende Schnittstelle implementiert werden, ohne dass ein Aufwand notwendig wäre, der eine größere Fehlerquelle darstellen könnte.

Die Recheneinheit des Dienstanbieters kann es beispielsweise vorsehen, dass Dienste angeboten werden, die sich auf die Elektromobilität beziehen, wobei es erfindungsgemäß möglich ist, dass jegliche weiteren Dienste angeboten werden. So kann gemäß einem Anwendungsszenario von der Recheneinheit ein so genannter Marktplatz angeboten werden, über den die Endkunden Produkte oder Dienstleistungen abfragen können. Folglich ist es erfindungsgemäß möglich eine erweiterte Infrastruktur bereitzustellen, die es ermöglicht dem Endkunden jegliche Dienste bereitzustellen, was unter anderem deshalb vorteilhaft ist, da nicht nur auf Seiten des Dienstanbieters Vorteile entstehen, wie sie im Folgenden angeführt werden, sondern vielmehr profitiert auch der Endkunde in mehrfacher Weise hiervon. So wird es dem Endkunden ermöglicht während eines längeren Ladevorgangs einen Marktplatz abzurufen und entsprechende Dienstleistungen in Anspruch zu nehmen. Folglich kann der Kunde eine Wartezeit an der Ladestation überbrücken und kann dementsprechend seine Zeit sinnvoll nutzen. Häufig findet ein Ladevorgang im "Windschatten" einer anderen Tätigkeit wie Arbeiten, Einkaufen oder Sport statt. Hier wäre es denkbar z.B. ein Gutschein- bzw. Bonussystem über den Marktplatz abzuwickeln, d.h. der Einzelhandel oder das Fitnesscenter gewährt Rabatte für einen Ladevorgang etc. Insgesamt fördert dies die Akzeptanz der Elektromobilität, da gemäß herkömmlicher Verfahren ein Nachteil darin besteht, dass der Kunde ohne jegliche Beschäftigung auf das Aufladen seiner Batterie warten muss. Erfindungsgemäß wird die Zeit nicht nur für den Endkunden überbrückt, sondern vielmehr profitiert auch der Dienstanbieter davon, dass der Kunde an einer weiteren Wertschöpfung teilnimmt.

Gemäß einem Aspekt der vorliegenden Erfindung wird die Datenkommunikationsschnittstelle in der Ladestation in einem Energiezähler integriert. Dies hat den Vorteil, dass herkömmliche Ladestationen mit einem geringen technischen Aufwand angepasst werden können und sodann in die erfindungsgemäße Infrastruktur integriert werden können. Darüber hinaus sind bereits Ladestationen mit einem Energiezähler vorhanden, sodass das vorgeschlagene Verfahren ebenfalls mit geringem technischem Aufwand implementierbar ist. Generell ist es bevorzugt, dass sich in der Ladestation ein Messzähler und eine Kommunikationsschnittstelle befinden, über welche die Messwerte an das Backend übermittelt werden. Die Komm-Schnittstelle kann an den Messzähler angebunden oder in ihn integriert sein oder beides zusammen auf einer Platine integriert werden.

Gemäß einem weiteren Aspekt der vorliegenden Erfindung wird der Energiezähler geeicht. Dies hat den Vorteil, dass spezielle Energiezähler verwendet werden können und sodann ist es ebenfalls möglich, den Energiezähler derart einzusetzen, dass nicht nur der geladene Strom abgerechnet wird, sondern vielmehr kann der Energiezähler auch mit einer Datenkommunikationsschnittstelle ausgestattet werden. Der Messzähler kann mit einer Datenkommunikationsstelle kombiniert werden. Folglich ist es erfindungsgemäß möglich, anhand des Energiezählers mehrere Aufgaben ausführen zu lassen, wodurch wiederum ein geringer technischer Aufwand besteht. Der technische Aufwand bezieht sich nicht lediglich auf die Bereitstellung der entsprechenden Komponenten, sondern vielmehr wird auch die Wartung reduziert.

Gemäß einem weiteren Aspekt der vorliegenden Erfindung wird die Datenkommunikationsschnittstelle und/ oder der Messzähler in der Ladestation gemäß der "Measuring Instruments Directive" ausgestaltet. Dies hat den Vorteil, dass bereits zertifizierte Schnittstellen bzw. Energiezähler verwendet werden können, welche entsprechend lizenziert wurden. Somit bestehen Standards, die erfindungsgemäß wieder verwendet werden können.

Gemäß einem weiteren Aspekt der vorliegenden Erfindung werden die Datenkommunikationsschnittstelle in der Ladestation und die Datenkommunikationsschnittstelle der Recheneinheit festverdrahtet kommunikationstechnisch gekoppelt. Es erfolgt beispielsweise eine kabelgebundene Anbindung an ein Datennetz mit der Rechnereinheit ("Ethernet"). Dies hat den Vorteil, dass eine effiziente Infrastruktur geschaffen wird und somit sind weniger Rechenschritte notwendig und bestehende Systeme können einfacher integriert werden. Die vorgeschlagene Infrastruktur ist folglich weniger fehleranfällig und Prozesse können im Wesentlichen automatisiert ausgeführt werden.

Gemäß einem weiteren Aspekt der vorliegenden Erfindung werden mittels der Datenkommunikationsschnittstelle der Recheneinheit Dienste unabhängig von einem Ladevorgang angeboten. Dies hat den Vorteil, dass Dienste angeboten werden können, welche sich nicht lediglich auf den Ladevorgang beziehen, wie das Laden an sich, sondern darüber hinaus können jegliche weiteren Dienste bereitgestellt werden. Lediglich ein Beispiel für einen solchen Datendienst ist ein sogenannter Marktplatz über den der Endkunde Produkte und Dienstleistungen erwerben kann.

Gemäß einem weiteren Aspekt der vorliegenden Erfindung wird die Recheneinheit als ein Server und/ oder ein Gateway ausgestaltet. Dies hat den Vorteil, dass in einfacher Art und Weise Applikationen installiert werden können und zudem können sogar standardisierte Schnittstellen wieder verwendet werden.

Gemäß einem weiteren Aspekt der vorliegenden Erfindung wird mittels der Recheneinheit ein elektronischer Marktplatz bereitgestellt. Dies hat den Vorteil, dass dem Endkunden eine weitere Möglichkeit gegeben wird, wie er Datendienste nutzen kann und folglich entsteht ein völlig neues Anwendungsszenario basierend auf der Elektromobilität. Darüber hinaus kann der Endkunde an einer Wertschöpfung teilnehmen und die Akzeptanz der Elektromobilität steigt aufgrund einer überbrückten Zeit an der Ladestation.

Die Aufgabe wird auch gelöst durch eine Systemanordnung zum Bereitstellen einer Datenverbindung zwischen einem Endkunden und einem Dienstanbieter, aufweisend eine Ladestation für ein elektrisch angetriebenes Kraftfahrzeug; und eine Datenkommunikationsschnittstelle in der Ladestation zur Kommunikation mit einer Datenkommunikationsschnittstelle einer Recheneinheit des Dienstanbieters, wobei eine direkte Kommunikationsverbindung von der Datenkommunikationsschnittstelle in der Ladestation zu der Datenkommunikationsschnittstelle der Recheneinheit des Dienstanbieters geschaffen ist.

In der Ladestation kann eine SIM-Karte integriert sein und die Ladestation kann via Mobilfunk an das Backend angeschlossen sein. Die SIM-Karte kann mittels einer Steckverbindung eingebracht sein und als Universal Integrated Circuit Card UICC vorliegen oder fest integriert sein und als embedded Universal Integrated Circuit Card eUICC vorliegen.

Die Aufgabe wird auch gelöst durch ein Computerprogrammprodukt mit Steuerbefehlen, welche das Verfahren ausführen und die vorgeschlagene Anordnung betreiben, wenn sie auf einem Computer zur Ausführung gebracht werden.

Erfindungsgemäß ist es besonders vorteilhaft, dass das Verfahren zum Betreiben der vorgeschlagenen Vorrichtungen und Einheiten bzw. der Systemanordnung verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Anwendungsszenario der vorliegenden Erfindung, wobei die vorgeschlagene Systemanordnung gemäß einem Aspekt der vorliegenden Erfindung zum Einsatz kommt; und
- Figur 2:: ein schematisches Ablaufdiagramm eines Verfahrens zum Bereitstellen einer Datenverbindung zwischen einem Endkunden und einem Dienstanbieter gemäß einem weiteren Aspekt der vorliegenden Erfindung.

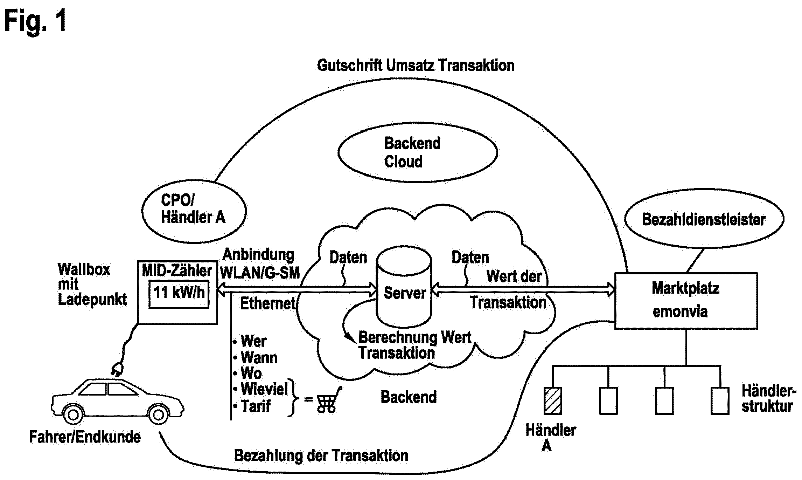

Figur 1 zeigt in einem schematischen Ablaufdiagramm ein Anwendungsszenario der vorliegenden Erfindung, wobei die vorgeschlagene Systemanordnung zum Einsatz kommt. Der Fachmann erkennt hierbei, dass das Anwendungsszenario technisch derart umgesetzt wird, dass insgesamt eine Telekommunikationsinfrastruktur beschrieben wird. So handelt es sich beispielsweise technisch bei einem Marktplatz um einen Server, der erfindungsgemäß neu angesprochen wird und geschickt in eine technische Infrastruktur integriert wird. Die jeweiligen Rollen werden also erfindungsgemäß anhand von technischen Vorrichtungen umgesetzt.

Die vorliegende Erfindung lässt sich beispielhaft anhand des folgenden Rollenverständnisses aufzeigen. Das Backend ist ein Marktplatz und ermöglicht technisch den Einkauf von Ladevorgängen sowie den Bezahlvorgang. Die CPO sind Händler und Endkunden kaufen beim Händler ein. Eine Auffassung des Backend als Marktplatz erlaubt eine Automatisierung der Prozesse wie das Onboarding der Händler, die Abrechnung der Ladevorgänge (=Einkäufe) ggü. Endkunden, das Sammeln der Umsätze jedes CPO (=Händler) auf einem eigenen Konto beim Bezahldienstleister und die periodische Auszahlung der Umsätze an den CPO (=Händler) durch den Bezahldienstleister.

Die Unterschiede zu bekannten Marktplatzbetreibern sind wie folgt. Bei klassischen Internet-Marktplätzen besteht keine direkte technische Verbindung zwischen dem Objekt der Leistungserbringung und dem Marktplatzprodukt des Bezahldienstleiters. Vielmehr wird auf der Internetseite des Marktplatzbetreibers das Marktplatzmodell des Bezahldienstleisters via Software Development Kit SDK angedockt bzw. eine Schnittstelle geschaffen oder alternativ "embedded". Kunden bestellen auf der Internetseite und werden über den Warenkorb beim Check out an den Bezahldienstleister "übergeben", wo dann die Bezahlinformationen der Kunden an den Bezahldienstleiter übergeben werden und der Bezahlprozess abgewickelt wird. Die Bezahlseite des Bezahldienstleisters wird in die Webseite des Marktplatzes "embedded", d.h. der Kunde gibt seine Bezahldaten direkt beim Bezahldienstleister ein obwohl er sich auf der Webseite des Anbieters befindet. Die Bezahldienstleister bieten den Marktplatzbetreibern dazu das Development SDK als fertigen Softwarebaustein zum Integrieren in die Webseite des Marktplatzes an.

Erfindungsgemäß ist eine direkte technische Verbindung zwischen dem Objekt der Leistungserbringung (=Messzähler am Ladepunkt) und dem Marktplatzabrechnungsprodukt des Bezahldienstleiters (=Ladevorgang) hergestellt und betrieben. Der Ladepunkt, im Speziellen der Messzähler (z.B. geeicht oder MIDkonform), ist demnach direkt an das Marktplatzgateway des Bezahldienstleisters angebunden. Eine direkte IT-technische Verbindung eines Ladepunktes mit dem Marktplatzprodukt eines Bezahldienstleisters entsteht. Der eichrechtskonforme MID-Zähler in der Ladeinfrastruktur erstellt Ladedaten/Transaktionsdaten(das entspricht dem Warenkorb: wieviel wurde geladen von wem zu welchem Tarif an welchem Ladepunkt). Der Ladevorgang wird im Marktplatz als eine Transaktion abgebildet, wobei die Informationen kWh, wer, wo, Tarif u.a. berücksichtigt werden können. Es gibt eine eindeutige Identifikation des Ladepunktes im Backend. Die Übermittlung des vom Messzähler im Ladepunkt erstellten Transaktion des zugehörigen Ladevorganges an das Backend erfolgt ebenfalls automatisch. Das Backend ermittelt den Warenkorbwert anhand der Transaktionsdaten des zugehörigen Ladevorganges (kwh, Tarif, Wer, Wo). Der Warenkorbwert wird an den Marktplatz via Standard-API übermittelt. Es erfolgt also eine Kette von Datenübertragungen mit dem Ziel die Messzähler an den Marktplatz anzubinden. Der Datenfluss geht also über den Messzähler, das Backend an den Marktplatz als "festverdrahtete" technische Kette beispielsweise über Ethernet und/ oder Mobilfunk. Ein analoger Datenfluss erfolgt gemäß einem Aspekt der vorliegenden Erfindung über den MID-Zähler, wobei eine Signatur Einsatz finden kann, das Netzwerk (beispielsweise Mobilfunk/ Ethernet), mindestens einen Server (Cloud) zu der Backend-Verarbeitung und Warenkorb (Server). Umgekehrt kann eine Kommunikation von dem Warenkorb bzw. den Bezahldienstleister an eine Zuordnungslogik bzw. eine Sortierlogik gem. Marktplatz erfolgen, mit einer Gutschrift an den CPO.

Vorgeschlagen wird insgesamt eine physikalische und IT-technische Anbindung eines Messzählers (z.B geeichter oder MID-konformer) via Backend an das Marktplatzabrechungsmodell eines Bezahldienstleisters. MID steht generell für Measuring Instruments Directive. Erfindungsgemäß wird sich insbesondere auf die Direktive 2004/22/EC und/ oder Direktive 2014/32/EU bezogen.

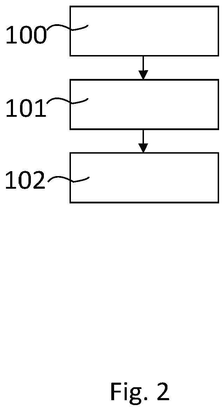

Figur 2 zeigt in einem schematischen Ablaufdiagramm ein Verfahren zum Bereitstellen einer Datenverbindung zwischen einem Endkunden und einem Dienstanbieter, aufweisend ein Betreiben 100 einer Ladestation für ein elektrisch angetriebenes Kraftfahrzeug; und ein Einrichten 101 einer Datenkommunikationsschnittstelle in der Ladestation zur Kommunikation mit einer Datenkommunikationsschnittstelle einer Recheneinheit des Dienstanbieters, wobei eine direkte Kommunikationsverbindung von der Datenkommunikationsschnittstelle in der Ladestation zu der Datenkommunikationsschnittstelle der Recheneinheit des Dienstanbieters geschaffen 102 wird.

Der Fachmann erkennt hierbei, dass die Schritte weitere Unterschritte aufweisen können und insbesondere, dass die Verfahrensschritte jeweils iterativ und/ oder in anderer Reihenfolge ausgeführt werden können.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben, wenn sie auf einem Computer zur Ausführung gebracht werden.

## Patentansprüche

1. Verfahren zum Bereitstellen einer Datenverbindung zwischen einem Endkunden und einem Dienstanbieter, aufweisend:
- ein Betreiben (100) einer Ladestation für ein elektrisch angetriebenes Kraftfahrzeug; und
- ein Einrichten (101) einer Datenkommunikationsschnittstelle in der Ladestation zur Kommunikation mit einer Datenkommunikationsschnittstelle einer Recheneinheit des Dienstanbieters, **dadurch gekennzeichnet, dass** eine direkte Kommunikationsverbindung von der Datenkommunikationsschnittstelle in der Ladestation zu der Datenkommunikationsschnittstelle der Recheneinheit des Dienstanbieters geschaffen (102) wird.

2. Verfahren nach Anspruch 1, **dadurch gekennzeichnet, dass** die Datenkommunikationsschnittstelle in der Ladestation in einem Energiezähler integriert wird und/ oder die Datenkommunikationsschnittstelle mitsamt einem Messzähler integriert wird.

3. Verfahren nach Anspruch 2, **dadurch gekennzeichnet, dass** der Energiezähler und/ oder der Messzähler geeicht wird.

4. Verfahren nach einem der vorhergehenden Ansprüche, **dadurch gekennzeichnet, dass** die Datenkommunikationsschnittstelle in der Ladestation, der Energiezähler und/ oder der Messzähler gemäß der "Measuring Instruments Directive" ausgestaltet wird.

5. Verfahren nach einem der vorhergehenden Ansprüche, **dadurch gekennzeichnet, dass** die Datenkommunikationsschnittstelle in der Ladestation und die Datenkommunikationsschnittstelle der Recheneinheit festverdrahtet kommunikationstechnisch gekoppelt werden.

6. Verfahren nach einem der vorhergehenden Ansprüche, **dadurch gekennzeichnet, dass** mittels der Datenkommunikationsschnittstelle der Recheneinheit Dienste unabhängig von einem Ladevorgang angeboten werden.

7. Verfahren nach einem der vorhergehenden Ansprüche, **dadurch gekennzeichnet, dass** die Recheneinheit als ein Server und/ oder ein Gateway ausgestaltet wird.

8. Verfahren nach einem der vorhergehenden Ansprüche, **dadurch gekennzeichnet, dass** mittels der Recheneinheit ein elektronischer Marktplatz bereitgestellt wird.

9. Systemanordnung zum Bereitstellen einer Datenverbindung zwischen einem Endkunden und einem Dienstanbieter, aufweisend:
- eine Ladestation für ein elektrisch angetriebenes Kraftfahrzeug; und
- eine Datenkommunikationsschnittstelle in der Ladestation zur Kommunikation mit einer Datenkommunikationsschnittstelle einer Recheneinheit des Dienstanbieters, **dadurch gekennzeichnet, dass** eine direkte Kommunikationsverbindung von der Datenkommunikationsschnittstelle in der Ladestation zu der Datenkommunikationsschnittstelle der Recheneinheit des Dienstanbieters geschaffen (102) ist.

10. Computerprogrammprodukt mit Steuerbefehlen, welche das Verfahren nach einem der Ansprüche 1 bis 8 ausführen, wenn sie auf einem Computer zur Ausführung gebracht werden.
